# EUROPEAN PATENT APPLICATION

(11) **EP 3 506 116 A1**
(43) Date of publication of application: **03.07.2019**
(21) Application number: 18209302.1
(22) Date of filing: 29.11.2018
(51) Int. Cl.: G06F 13/16, G06F 13/18, G06F 9/50, G06F 9/54, H04L 29/08, H04L 12/24

(54) **SHARED MEMORY CONTROLLER IN A DATA CENTER**

(30) Priority: 28.12.2017 US 201715857337
(71) Applicant: INTEL Corporation, Santa Clara, CA 95054 (US)
(72) Inventor: GUIM BERNAT, Francesc, Barcelona (ES); SCHMISSEUR, Mark A., Phoenix, Arizona 85048 (US); KUMAR, Karthik, Chandler, Arizona 85249 (US); WILLHALM, Thomas, 69207 Sandhausen (DE)
(74) Representative: Rummler, Felix

(57) **Abstract**

Technology for a memory controller is described. The memory controller can receive a request from a data consumer node in a data center for training data. The training data indicated in the request can correspond to a model identifier (ID) of a model that runs on the data consumer node. The memory controller can identify a data provider node in the data center that stores the training data that is requested by the data consumer node. The data provider node can be identified using a tracking table that is maintained at the memory controller. The memory controller can send an instruction to the data provider node that instructs the data provider node to send the training data to the data consumer node to enable training of the model that runs on the data consumer node.

## Description

### BACKGROUND

Artificial intelligence (AI) can involve discovering patterns in input data, constructing AI models using discovered patterns in the input data, and using the AI models to make predictions on subsequently received data. In one example, building the AI model can involve collecting input data for generation of the AI model. The input data can be received from a data provider. The input data can be used as training data to train the AI model. For example, the AI model can be trained using the training data to recognize patterns in input data and make inferences with respect to the input data.

In one example, building and training AI models can involve processing a relatively large input data set, which can consume a relatively large amount of computing resources. Therefore, AI is generally performed using dedicated graphics processing unit (GPU) and field-programmable gate array (FPGA) hardware in a cloud environment.

### BRIEF DESCRIPTION OF THE DRAWINGS

Features and advantages of invention embodiments will be apparent from the detailed description which follows, taken in conjunction with the accompanying drawings, which together illustrate, by way of example, invention features; and, wherein:
FIG. 1 illustrates a system and related operations for performing data operations using a distributed shared memory (DSM) controller in accordance with an example embodiment;
FIG. 2 illustrates a distributed shared memory (DSM) controller in accordance with an example embodiment;
FIG. 3 illustrates a drawer that includes processor(s), storage devices and AI hardware platform(s) in accordance with an example embodiment;
FIG. 4 illustrates a memory controller in accordance with an example embodiment;
FIG. 5 illustrates a system for performing data operations on storage devices in accordance with an example embodiment;
FIG. 6 is a flowchart illustrating operations for assisting data transfers in a data center in accordance with an example embodiment; and
FIG. 7 illustrates a computing system that includes a data storage device in accordance with an example embodiment.

Reference will now be made to the exemplary embodiments illustrated, and specific language will be used herein to describe the same. It will nevertheless be understood that no limitation on invention scope is thereby intended.

### DESCRIPTION OF EMBODIMENTS

Before the disclosed invention embodiments are described, it is to be understood that this disclosure is not limited to the particular structures, process steps, or materials disclosed herein, but is extended to equivalents thereof as would be recognized by those ordinarily skilled in the relevant arts. It should also be understood that terminology employed herein is used for the purpose of describing particular examples or embodiments only and is not intended to be limiting. The same reference numerals in different drawings represent the same element. Numbers provided in flow charts and processes are provided for clarity in illustrating steps and operations and do not necessarily indicate a particular order or sequence.

Furthermore, the described features, structures, or characteristics can be combined in any suitable manner in one or more embodiments. In the following description, numerous specific details are provided, such as examples of layouts, distances, network examples, etc., to provide a thorough understanding of various invention embodiments. One skilled in the relevant art will recognize, however, that such detailed embodiments do not limit the overall inventive concepts articulated herein, but are merely representative thereof.

As used in this specification and the appended claims, the singular forms "a," "an" and "the" include plural referents unless the context clearly dictates otherwise. Thus, for example, reference to "a bit line" includes a plurality of such bit lines.

Reference throughout this specification to "an example" means that a particular feature, structure, or characteristic described in connection with the example is included in at least one embodiment of the present invention. Thus, appearances of the phrases "in an example" or "an embodiment" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as defacto equivalents of one another, but are to be considered as separate and autonomous representations under the present disclosure.

Furthermore, the described features, structures, or characteristics can be combined in any suitable manner in one or more embodiments. In the following description, numerous specific details are provided, such as examples of layouts, distances, network examples, etc., to provide a thorough understanding of invention embodiments. One skilled in the relevant art will recognize, however, that the technology can be practiced without one or more of the specific details, or with other methods, components, layouts, etc. In other instances, well-known structures, materials, or operations may not be shown or described in detail to avoid obscuring aspects of the disclosure.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of' or "consists of' are closed terms, and include only the components, structures, steps, or the like specifically listed in conjunction with such terms, as well as that which is in accordance with U.S. Patent law. "Consisting essentially of' or "consists essentially of' have the meaning generally ascribed to them by U.S. Patent law. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of' language, even though not expressly recited in a list of items following such terminology. When using an open ended term in this specification, like "comprising" or "including," it is understood that direct support should be afforded also to "consisting essentially of' language as well as "consisting of' language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, comparative terms such as "increased," "decreased," "better," "worse," "higher," "lower," "enhanced," and the like refer to a property of a device, component, or activity that is measurably different from other devices, components, or activities in a surrounding or adjacent area, in a single device or in multiple comparable devices, in a group or class, in multiple groups or classes, or as compared to the known state of the art. For example, a data region that has an "increased" risk of corruption can refer to a region of a memory device which is more likely to have write errors to it than other regions in the same memory device. A number of factors can cause such increased risk, including location, fabrication process, number of program pulses applied to the region, etc.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of' particles would either completely lack particles, or so nearly completely lack particles that the effect would be the same as if it completely lacked particles. In other words, a composition that is "substantially free of' an ingredient or element may still actually contain such item as long as there is no measurable effect thereof.

As used herein, the term "about" is used to provide flexibility to a numerical range endpoint by providing that a given value may be "a little above" or "a little below" the endpoint. However, it is to be understood that even when the term "about" is used in the present specification in connection with a specific numerical value, that support for the exact numerical value recited apart from the "about" terminology is also provided.

Numerical amounts and data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 1.5, 2, 2.3, 3, 3.8, 4, 4.6, 5, and 5.1 individually.

This same principle applies to ranges reciting only one numerical value as a minimum or a maximum. Furthermore, such an interpretation should apply regardless of the breadth of the range or the characteristics being described.

An initial overview of technology embodiments is provided below and then specific technology embodiments are described in further detail later. This initial summary is intended to aid readers in understanding the technology more quickly, but is not intended to identify key or essential technological features nor is it intended to limit the scope of the claimed subject matter. Unless defined otherwise, all technical and scientific terms used herein have the same meaning as commonly understood by one of ordinary skill in the art to which this disclosure belongs.

In recent years, increased performance and capabilities of hardware platforms have enabled advances in artificial intelligence (AI). This recent advancement in AI can be due to high-density compute platforms, which can be better equipped to process increased data set sizes. In other words, these high-density compute platforms can achieve increased performance levels on AI workloads. For example, as training AI models (or deep learning networks) involves moving a large amount of data, current hardware platforms used for AI can include high-capacity, high-speed high bandwidth memory technologies, which can provide a maximum level of on-chip storage and an increased memory access speed. Current hardware platforms used for AI can offer separate pipelines for computation and data management, such that new data can be available for computation. In addition, current hardware platforms used for AI can include bidirectional high-bandwidth links, which can enable application-specific integrated circuits (ASICs) to interconnect so data can move between them, which can result in additional compute resources being assigned to a task or model size expansion without a decrease in speed.

In one example, memory technologies in a data center can include a memory with volatile memory, nonvolatile memory (NVM), or a combination thereof. Volatile memory can include any type of volatile memory, and is not considered to be limiting. Volatile memory is a storage medium that requires power to maintain the state of data stored by the medium. Non-limiting examples of volatile memory can include random access memory (RAM), such as static random-access memory (SRAM), dynamic random-access memory (DRAM), synchronous dynamic random-access memory (SDRAM), and the like, including combinations thereof. SDRAM memory can include any variant thereof, such as single data rate SDRAM (SDR DRAM), double data rate (DDR) SDRAM, including DDR, DDR2, DDR3, DDR4, DDR5, and so on, described collectively as DDRx, and low power DDR (LPDDR) SDRAM, including LPDDR, LPDDR2, LPDDR3, LPDDR4, and so on, described collectively as LPDDRx. In some examples, DRAM complies with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209B for LPDDR SDRAM, JESD209-2F for LPDDR2 SDRAM, JESD209-3C for LPDDR3 SDRAM, and JESD209-4A for LPDDR4 SDRAM (these standards are available at www.jedec.org; DDR5 SDRAM is forthcoming). Such standards (and similar standards) may be referred to as DDR-based or LPDDR-based standards, and communication interfaces that implement such standards may be referred to as DDR-based or LPDDR-based interfaces. In one specific example, the system memory can be DRAM. In another specific example, the system memory can be DDRx SDRAM. In yet another specific aspect, the system memory can be LPDDRx SDRAM.

NVM is a storage medium that does not require power to maintain the state of data stored by the medium. NVM has traditionally been used for the task of data storage, or long-term persistent storage, but new and evolving memory technologies allow the use of NVM in roles that extend beyond traditional data storage. One example of such a role is the use of NVM as main or system memory. Non-volatile system memory (NVMsys) can combine data reliability of traditional storage with ultra-low latency and high bandwidth performance, having many advantages over traditional volatile memory, such as high density, large capacity, lower power consumption, and reduced manufacturing complexity, to name a few. Byte-addressable, write-in-place NVM such as three-dimensional (3D) cross-point memory, for example, can operate as byte-addressable memory similar to dynamic random-access memory (DRAM), or as block-addressable memory similar to NAND flash. In other words, such NVM can operate as system memory or as persistent storage memory (NVMstor). In some situations where NVM is functioning as system memory, stored data can be discarded or otherwise rendered unreadable when power to the NVMsys is interrupted. NVMsys also allows increased flexibility in data management by providing non-volatile, low-latency memory that can be located closer to a processor in a computing device. In some examples, NVMsys can reside on a DRAM bus, such that the NVMsys can provide ultra-fast DRAM-like access to data. NVMsys can also be useful in computing environments that frequently access large, complex data sets, and environments that are sensitive to downtime caused by power failures or system crashes.

Non-limiting examples of NVM can include planar or three-dimensional (3D) NAND flash memory, including single or multi-threshold-level NAND flash memory, NOR flash memory, single or multi-level Phase Change Memory (PCM), such as chalcogenide glass PCM, planar or 3D PCM, cross-point array memory, including 3D cross-point memory, non-volatile dual in-line memory module (NVDIMM)-based memory, such as flash-based (NVDIMM-F) memory, flash/DRAM-based (NVDIMM-N) memory, persistent memory-based (NVDIMM-P) memory, 3D cross-point-based NVDIMM memory, resistive RAM (ReRAM), including metal-oxide- or oxygen vacancy-based ReRAM, such as HfO2-, Hf/HfOx-, Ti/HfO2-, TiOx-, and TaOx-based ReRAM, filament-based ReRAM, such as Ag/GeS2-, ZrTe/Al2O3-, and Ag-based ReRAM, programmable metallization cell (PMC) memory, such as conductive-bridging RAM (CBRAM), silicon-oxide-nitride-oxide-silicon (SONOS) memory, ferroelectric RAM (FeRAM), ferroelectric transistor RAM (Fe-TRAM), anti-ferroelectric memory, polymer memory (e.g., ferroelectric polymer memory), magnetoresistive RAM (MRAM), write-in-place non-volatile MRAM (NVMRAM), spin-transfer torque (STT) memory, spin-orbit torque (SOT) memory, nanowire memory, electrically erasable programmable read-only memory (EEPROM), nanotube RAM (NRAM), other memristor- and thyristor-based memory, spintronic magnetic junction-based memory, magnetic tunneling junction (MTJ)-based memory, domain wall (DW)-based memory, and the like, including combinations thereof. The term "memory device" can refer to the die itself and/or to a packaged memory product. NVM can be byte or block addressable. In some examples, NVM can comply with one or more standards promulgated by the Joint Electron Device Engineering Council (JEDEC), such as JESD21-C, JESD218, JESD219, JESD220-1, JESD223B, JESD223-1, or other suitable standard (the JEDEC standards cited herein are available at www.jedec.org). In one specific example, the NVM can be 3D cross-point memory. In another specific example, the memory can be NAND or 3D NAND memory. In another specific example, the system memory can be STT memory.

One challenge in large scale-out AI data center deployments is efficiently connecting multiple data providers (or data producers) for specific AI models and data consumers (or data processors) that process the data for training or inferencing particular AI models. Examples of the data providers can include processor(s) generating training data or processor(s) requesting inferences), and examples of the data consumers can include AI hardware platforms or AI field programmable gate arrays (FPGAs). This challenge has been encountered by multiple customers implementing data center AI solutions. In previous solutions, to address this issue, data centers would employ complex software stacks that implemented data distribution and discovery among the data providers and AI appliances. Another drawback in previous solutions is the adding of multiple layers of software calls (and corresponding performance overhead) by writing data in shared file systems or databases, which can involve using protocols that require specific compute units to run dedicated software pieces.

In the present technology, data center architectures can include a shared memory controller (or shared memory agent) for AI training data. The shared memory controller can be used by data providers to expose their AI training and inferencing data, as well as by AI models to consume data sets to train the AI models or to inference AI requests without traversing multiple software stack layers. The shared memory controller can enable different AI entities in a data center to communicate with each other and exchange information without increased software overheads, as in previous solutions. For example, the shared memory controller can track a distribution of AI model data across different data providers, and the shared memory controller can expose interfaces (or keys) to register or de-register AI data sets for each of the AI models. More specifically, the shared memory controller can manage different AI data sets using the interfaces (or keys), such that receivers having the appropriate keys can access a given AI data set, thereby enabling a hardware-based AI data set exchange marketplace in the data center.

In the present technology, the shared memory controller can be a centralized memory controller or a distributed memory controller. The shared memory controller can be placed in various areas of the data center, such as in storage node controllers of the data center, in switches of the data center, new elements in storage racks in the data center, etc. The shared memory controller can be placed per storage rack in the data center, or alternatively, the shared memory controller can operate per data center (e.g., one shared memory controller can service an entire data center).

In the present technology, the shared memory controller can enable discovery and access to data sets corresponding to different AI models in a scale-out system. The shared memory controller in the data center can facilitate the distribution and sharing of AI data sets between the data providers and the data consumers across the data center. As described in the further detail below, the shared memory controller can enable: the registration of AI specific data sets (with or without metadata), the discovery of data providers in the data center that host data sets for certain types of AI models, and the discovery of AI data subsets of AI data sets associated with a particular AI model ID that satisfy certain metadata parameters. In the present technology, platforms hosting end-point data providers can include logic that implements communication messages between the shared memory controller in the storage rack/data center and local storage. In addition, in the present technology, a certain quality of service (QoS) or service level agreement (SLA) can be defined for specific AI training models that access the shared memory controller.

In previous solutions, shared memory controllers would be used in network interface controllers (NICs), switches, etc. However, previous shared memory controllers were defined in the context of generic consistency and coherency memory models. In contrast, the shared memory controller described herein can be specific to AI appliances in the data center, rather than general purpose schemes. The shared memory controller described herein includes interfaces for enabling AI models to access training or inference data sets, and mechanisms for which data providers expose their training or inference data sets to the AI models via the shared memory controller. In addition, the shared memory controller described herein follows an AI distributed shared memory (DSM) controller architecture, which is a novel model based on AI semantics and using specific novel architectures and protocols. In contrast, traditional DSM controller architectures are based on memory addresses.

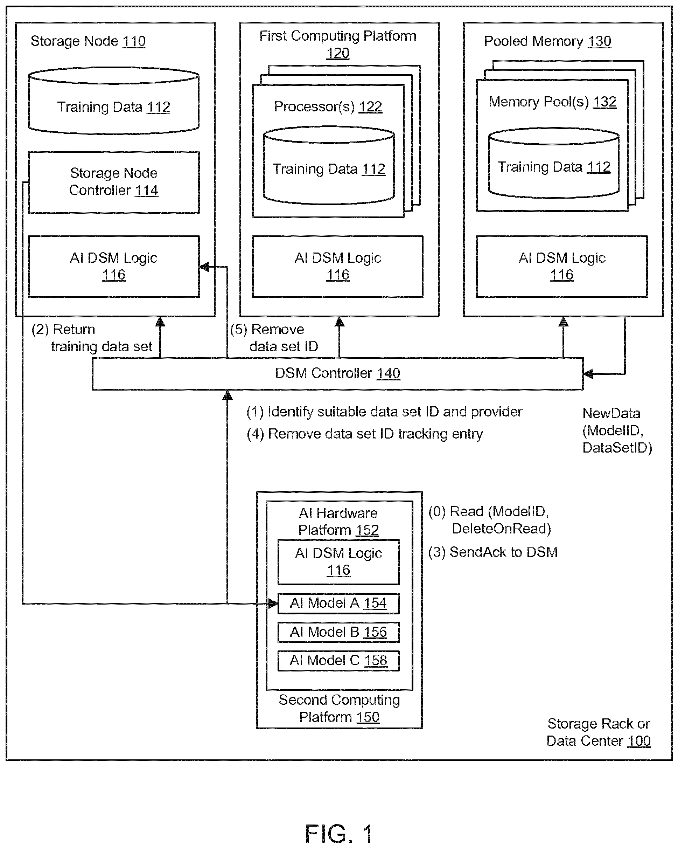

FIG. 1 illustrates an exemplary system and related operations for performing data operations using a distributed shared memory (DSM) controller 140 (also referred to as shared memory controller or memory controller). The DSM controller 140 can be included in a storage rack or data center 100. For example, the DSM controller 140 can be a distributed memory controller that is included in each storage rack of a data center, or alternatively, the DSM controller 140 can be a centralized memory controller that is included per data center.

In one example, the DSM controller 140 can be communicatively coupled to a storage node 110, a first computing platform 120 and pooled memory 130. The storage node 110 can include training data 112, a storage node controller 114 and AI DSM logic 116. The first computing platform 120 can include one or more processors 122 that include training data 112, and AI DSM logic 116. The pooled memory 130 can include memory pool(s) 132 that include training data 112, and AI DSM logic 116. In other words, the training data 112 and the AI DSM logic 116 can be included in each of the storage node 110, the first computing platform 120 and the pooled memory 130. The AI DSM logic 116 can enable the storage node 110, the first computing platform 120 and the pooled memory 130, respectively, to communicate with the DSM controller 140.

In one example, the DSM controller 140 can be communicatively coupled to a second computing platform 150. The second computing platform 150 can include an AI hardware platform 152, which can include AI DSM logic 116. The AI hardware platform 152 may run a plurality of AI models, such as AI Model A 154, AI Model B 156 and AI Model C 158. In this example, the storage node 110, the first computing platform 120 and the pooled memory 130 that include the training data 112 can be data provider nodes, and the second computing platform 150 that includes the AI hardware platform 152 running the AI models can be a data consumer node.

In one example, the DSM controller 140 can facilitate the exchange of AI training data between the data provider nodes (e.g., the storage node 110, the first computing platform 120 or the pooled memory 130) and the data consumer nodes (e.g., the second computing platform 150 that includes the AI hardware platform 152). For example, the DSM controller 140 can act as an intermediary to facilitate the transfer of AI training data between a data provider node and a data consumer node. In other words, the DSM controller 140 can facilitate a distribution and sharing of AI training data between the data consumer node(s) and the data provider node(s) in the storage rack or data center 100. The data consumer node can consume the received AI training data for training of an AI model that runs at the data consumer node. In one example, the DSM controller 140 can maintain a tracking table that tracks a storage of AI training data on different data provider nodes on a per AI model ID basis. Therefore, the DSM controller 140 can receive a request for AI training data from a data consumer node, identify a data provider node that possesses the requested AI training data, and then instruct the data provider node to send the AI training data to the data consumer node. In addition, the AI model ID can be a universally unique identifier (UUID), and the AI model ID can be previously agreed upon by devices and a data center or owner models.

In one configuration, the DSM controller 140 can receive a request from a data consumer node, such as the second computing platform 150 that includes the AI hardware platform 152, for AI training data. The AI training data indicated in the request can correspond to an AI model ID of an AI model (e.g., AI Model A 154, AI Model B 156 or AI Model C 158) that runs on the second computing platform 150. In response to the request, the DSM controller 140 can identify a data provider node in the storage rack or data center 100 that stores the AI training data that is requested by the data consumer node, such as the second computing platform 150. For example, the DSM controller 140 can identify the data provider node to be one of the storage node 110, the first computing platform 120 or the pooled memory 130. The DSM controller 140 can identify the data provider node that stores the requested AI training data using a tracking table (or mapping table) that is maintained at the DSM controller 140. The tracking table can track a storage of AI training data across different data provider nodes in the storage rack or data center 100 on a per AI model ID basis. Therefore, based on the AI model ID corresponding to the requested AI training data, the DSM controller 140 can access the tracking table to determine a particular data provider node that stores the requested AI training data corresponding to the AI model ID. The DSM controller 140 can send an instruction to the data provider node that stores the requested AI training data, and the instruction can instruct the data provider node to send the AI training data to the data consumer node, such as the second computing platform 150. The DSM controller 140 can send the instruction via the AI DSM logic 116 in the data provider node. Based on the instruction received from the DSM controller 140, the data provider node can send the AI training data to the second computing platform 150. The data provider node can send the AI training data directly to the second computing platform 150, or alternatively, via the DSM controller 140. The second computing platform 150 can use the AI training data to train one of the AI models that runs on the AI hardware platform 152 on the second computing platform 150.

As a non-limiting example, the AI hardware platform 152 can run a vehicle AI model. The vehicle AI model can be associated with a certain vehicle AI model ID. The AI hardware platform 152 may wish to obtain vehicle sensor data for training of the vehicle AI model. The vehicle sensor data may be stored in one or more of the data provider nodes in the storage rack or data center 100, but the AI hardware platform 152 may not know a storage location of the vehicle sensor data. Therefore, the AI hardware platform 152 can send a request to the DSM controller 140 for vehicle sensor data. The request can include the vehicle AI model ID to inform the DSM controller 140 of the vehicle AI model that is to consume the vehicle sensor data. The DSM controller 140 can receive the request with the vehicle AI model ID, and the DSM controller 140 can access a tracking table to determine one or more data provider nodes that are currently storing the requested vehicle sensor data. In other words, based on the vehicle AI model ID, the DSM controller 140 can access the tracking table to determine data provider node(s) that are currently storing vehicle sensor data associated with the vehicle AI model ID. In one example, the DSM controller 140 can determine that the storage node 110 is currently storing the vehicle sensor data. The DSM controller 140 can send an instruction to the storage node controller 114 in the storage node 110 via the AI DSM logic 116 in the storage node 110, and based on the instruction, the storage node controller 114 can send the vehicle sensor data to the AI hardware platform 152. The AI hardware platform 152 can use the vehicle sensor data to train the vehicle AI model that is running on the AI hardware platform 152. In an alternative example, the DSM controller 140 can determine that the memory pool(s) 132 in the pooled memory 130 currently includes the vehicle sensor data. The DSM controller 140 can send an instruction to the pooled memory 130 via the AI DSM logic 116 in the pooled memory 130, and based on the instruction, the pooled memory 130 can send the vehicle sensor data to the AI hardware platform 152. The pooled memory 130 can send the vehicle sensor data directly to the AI hardware platform 152, or alternatively, via the DSM controller 140.

In one example, the DSM controller 140 can receive an acknowledgement (ACK) from the data consumer node, such as the second computing platform 150, after the AI training data is received at the data consumer node from the data provider node. In another example, the DSM controller 140 can instruct the data provider node (e.g., the storage node 110, the first computing platform 120 or the pooled memory 130) to delete the AI training data from the data provider node after the AI training data is provided to the data consumer node.

As an example, the DSM controller 140 can receive a read request from the second computing platform 150, and the read request can include an AI model ID and an indication to delete AI training data associated with the AI model ID after the read. The DSM controller 140 can identify, using a tracking table, a suitable AI data set ID (that corresponds to the AI model ID) and a data provider node that possesses the AI data set associated with the AI data set ID. For example, the DSM controller 140 can determine that the storage node 110 possesses the identified AI data set. The DSM controller 140 can send an instruction to the storage node 110 to return the AI data set, and in response, the storage node controller 114 in the storage node 110 can return the AI data set to the second computing platform 150. The second computing platform 150 can receive the AI data set, and then send an ACK to the DSM controller 140. After the receipt of the ACK, the DSM controller 140 can remove an AI data set ID tracking entry (that corresponds to the returned AI data set) from the tracking table, and the storage node 110 can remove the AI data set associated with the AI data set ID from the storage node 110.

In one configuration, the DSM controller 140 can discover AI training data stored in a plurality of data provider nodes in the storage rack or data center 100, where the AI training data can be associated with certain AI model IDs. The DSM controller 140 can register the AI training data that is associated with the AI model IDs. More specifically, the DSM controller 140 can perform the registration of the AI training data by adding an indication of the AI training data (or AI data sets), data provider nodes(s) that store the AI training data, and associated AI model IDs (or AI data set IDs) to the tracking table that is stored at the DSM controller 140.

As an example, the pooled memory 130 can send a new data message to the DSM controller 140. The new data command can include an AI model ID and an AI data set ID, which can correspond to an AI model and AI data set that is stored in the pooled memory 130. In response to receiving the new data message, the DSM controller 140 can register the AI data set that is stored in the pooled memory 130. For example, the DSM controller 140 can add an indication of the AI data set, the pooled memory 130 and the AI data set ID to the tracking table that is stored at the DSM controller 140.

In one example, the DSM controller 140 can manage a desired quality of service (QoS) or a service level agreement (SLA) for an AI model that is associated with an AI model ID. The desired QoS or the SLA can define an amount of bandwidth for reading AI training data associated with the AI model ID from a data provider node and/or storing AI training data associated with the AI model ID to a data provider node. In other words, each AI model ID can be associated with a defined amount of bandwidth, per the desired QoS or the SLA. As a non-limiting example, the DSM controller 140 can define a QoS or SLA that assigns 10-gigabits-per-second (10G) for reading/writing weather data from/to a weather prediction AI model that is stored on the AI hardware platform 152. In another example, the DSM controller 140 can assign a defined amount of bandwidth per AI model type (e.g., multiple AI models that are all associated with fraud detection can be collectively assigned a defined amount of bandwidth). In yet another example, the QoS can be bidirectional, such that data providers can define an amount of data that can be provided per AI model ID or AI model type, and data consumers can define an amount of data that can be globally fetched for a particular AI model ID or AI model type.

In one example, the DSM controller 140 can receive multiple requests from the data consumer node, such as the second computing platform 150, and the multiple requests may be for AI training data associated with multiple AI model IDs. The DSM controller 140 can determine that the requested AI training data is currently being stored in multiple data provider nodes in the storage rack or data center 100. In this case, the DSM controller 140 can apply load balancing when sending requests (or scheduling requests) to the multiple data provider nodes to provide the AI training data to the data consumer node. For example, when distributing the requests to the multiple data provider nodes, based on the load balancing, the DSM controller 140 can attempt to match a given bandwidth target for each of the AI models running on the data consumer node.

In one example, the DSM controller 140 can receive multiple requests received from the data consumer node, such as the second computing platform 150, in which each request can be for AI training data associated with a separate AI model ID. The DSM controller 140 can determine, using the tracking table, a priority level for each of the AI model IDs associated with the multiple requests received from the data consumer node. The DSM controller 140 can process the requests in order of priority based on the priority level for each of the AI model IDs associated with the multiple requests received from the data consumer node.

In one example, the AI models or AI model IDs can have different priorities for QoS/SLA. In another example, different data consumers can have different priority levels as well. For example, a particular data consumer can be assigned a higher priority (e.g., irrespective of the AI model or AI model ID) as compared to other data consumers.

As a non-limiting example, the DSM controller 140 can determine, using the tracking table, that AI model A has a higher priority level, AI model B has a medium priority level, and AI model C has a lowest priority level. Therefore, when receiving requests for AI training data associated with AI model A, AI model B and/or AI model C, the DSM controller 140 can prioritize requests for AI training data associated with AI model A over AI model B and AI model C, and so on.

In one configuration, the DSM controller 140 can expose interfaces to the data provider nodes and the data consumer nodes for registration and consumption of AI data set models. The DSM controller 140 can be used to track and manage AI data sets, as well for managing desired QoS and SLAs associated with AI model IDs. One example of the QoS can involve limiting an amount of data bandwidth consumed from particular platforms or data providers. Another example of the QoS can involve assigning increased priority to certain types of AI models or AI model IDs, which are fetching data via the DSM controller 140 during training. The data provider nodes can include a mechanism to register new AI data sets and new types of AI data sets associated with AI models. The data provider nodes can include logic to access registered data and perform basic operations on the registered data (e.g., reading and deleting an instance for model AI X or model type, reading and deleting a specific instance number, reading and deleting an instance for an AI model ID or AI model type that matches a certain type of metadata). The data provider nodes can include metadata that can be used to retrieve specific types of AI data sets per AI model ID or AI model type. The data consumer nodes can include logic to discover types of AI training data that are available (e.g., based on AI model IDs, available metadata), and retrieving AI data sets for AI model IDs or AI model types, and based on matching specific metadata.

In one example, an AI model data set can be divided across multiple data providers. In other words, in one case, different data sets can be requested in which each data set can be stored in a different data provider, but in another case, one data set can be requested and the data set can be stored in pieces across multiple data providers.

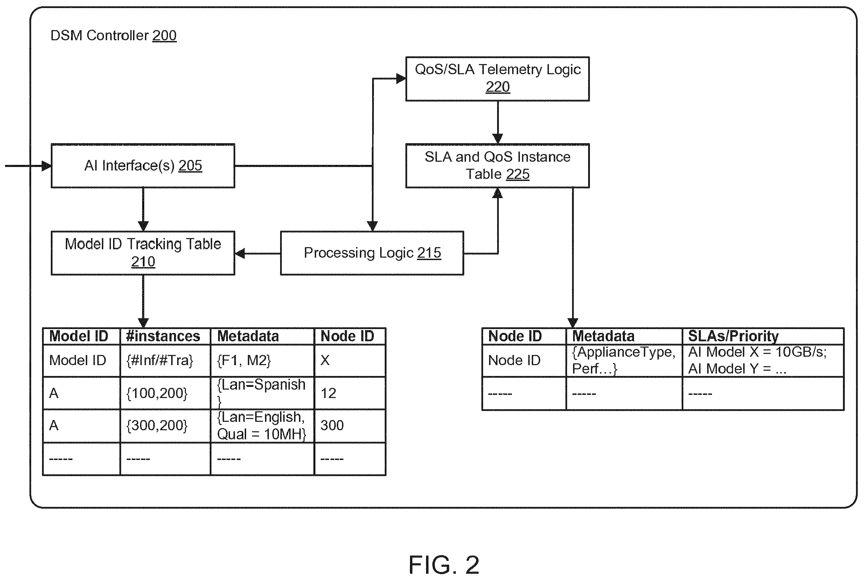

FIG. 2 illustrates an example of a distributed shared memory (DSM) controller 200 (also referred to as a shared memory controller or a memory controller). The DSM controller 200 can include AI interface(s) 205, a model ID tracking table 210, processing logic 215, QoS/SLA telemetry logic 220 and an SLA and QoS instance table 225. The AI interface(s) 205 can be exposed to data provider nodes and data consumer nodes that are accessing functionalities of the DSM controller 200. For example, the AI interface(s) 205 can include an interface for registering or re-registering new types of AI data sets that are available for a corresponding AI model ID or AI model type, and the corresponding metadata. The AI interface(s) 205 can include an interface for discovering and accessing specific AI data sets. The access to specific AI data sets can involve an AI model ID, an AI model type, metadata, other parameters, etc. that indicate whether AI data sets are to be removed after access. In addition, the AI interface(s) 205 can include an interface for managing QoS features associated with AI instances or AI model instances (e.g., training instances or inference instances), where QoS or SLA information can include priority information, an amount of read or write bandwidth that is permitted, etc.

In one example, the model ID tracking table 210 can be used to track the presence of AI training data or AI inference data in each of the data provider nodes. The AI training data and AI inference data can be tracked per address ranges in memory and/or based on a number of AI instances. In addition, each entry in the model ID tracking table 210 can include metadata that describes a type of AI data, etc. As an example, the model ID tracking table 210 can include for a given AI model ID, the presence of AI training data or AI inference data (e.g., number of instances of training data (Tra) and inference data (Inf)), metadata and a corresponding node ID. The processing logic 215 can process requests from data consumer nodes (or AI appliances) that are performing AI training or AI inferencing. The QoS/SLA telemetry logic 220 can receive data from different data consumer nodes and data provider nodes, and this data can be used by the processing logic 215 to implement certain types of policies and improve load balancing schemes. In addition, the SLA and QoS instance table 225 can store SLA and QoS data registered by AI instances. For example, the SLA and QoS instance table 225 can include SLA/priority information for different AI models that corresponds to a certain node ID and metadata (e.g., appliance type performance metadata).

As an example, the model ID tracking table 210 can include, for each AI model that is available at the different endpoints, a number of AI instances that a particular endpoint includes and metadata that can potentially be used for addressing a request from Model A. If the request from Model A is for AI training data that is in English, then the processing logic 215 can access the model ID tracking table 210 and select a certain node that is exposing or providing AI training data for Model A that is in English.

In one configuration, AI training models can process a set of input data (or training data) in order to generate or train one or more AI models (e.g., Deep Neural Networks). The input data can be divided into a set of distinct AI data sets, which can be processed separately. For example, to train an AI model model for speech recognition, thousands of different speech snippets, as well as their response variables, can be used to train the AI model for speech recognition. In one example, knowing, managing and discovering AI training data sets can be costly from a memory perspective, as existing memory systems are general purpose and are generally designed for any type of application usage. Therefore, it can be cumbersome for existing memory systems to track, identify and transfer chunks of AI data sets by issuing load and store operations at a cache line granularity. For example, processing an AI training model A can involve accessing a next AI data set Y to be processed. The access to the AI data set Y can involve discovering a memory location of Y, accessing the AI data set Y, issuing a series of loads and stores for the AI data set Y, etc.

In previous solutions, in AI appliances, memory and storage units can be specialized (e.g., cache line granularity can be 64 bytes) and tailored to memory inference and training data sets (e.g., variable sizes). The ability to define specialized memory and storage solutions for certain applications could simplify and improve data management. For example, data operations could be more flexible and transparent using such memory and storage definitions (e.g., an operation to retrieve a next training data set for model ID and then delete the training data set after being returned). In addition, for previous pooled or disaggregated memory solutions at the rack level (in which many compute elements access certain data sets), it can be cumbersome to share and manage information about the datasets, as well as the data sets themselves. Thus, it would be desirable to design an AI data set centric memory usage management solution.

In the present technology, novel memory and storage devices can be specialized to handle AI data sets (which can be data sets for training or inference). Controllers (e.g., memory and storage controllers) and physical devices (e.g., DIMMs) can be extended to expose these new types of interfaces. Processors can be extended, such that existing architecture elements can facilitate the movement of data to specific buffers directly accessible by AI appliances or compute elements (e.g., cores in a processor, or bit streams in an FPGA. In the present technology, in addition to being more intuitive for AI applications and reducing the amount of software overhead, the memory controllers and physical devices can be optimized for data access (e.g., load balancing, power based decisions).

In the present technology, memory and storage architectures can be extended to include new logic that exposes interfaces to enable memory to be accessed and used at an AI training and inference data set granularity. These units of use can be referred to as dataset drawers. The memory controllers (as well as other memory agents and memory DIMMs) can maintain metadata that includes, for each model ID (registered by a software stack), memory regions in which data is located, as well as certain data characteristics (e.g., a size of an inference data set). In other words, the metadata can include location(s) and characteristic(s) of a dataset drawer. In the present technology, the memory controller can expose an interface to an AI software stack to read or write AI training or inference data sets for a particular AI model ID, and with or without a specific data set index (e.g., an instruction can be sent to read training data set 100 for AI model ID x). In addition, this interface can enable data sets to be deleted upon the data sets being read, which can be useful for AI training. This novel interface can reduce overhead and complexity of existing software solutions.

The present technology can be applicable to various compute entities that are capable of hosting these new types of memories, and these compute entities can include processors, FPGAs, new ASICs, AI hardware platforms, etc. These compute entities that host these new types of memory and storage can include buffers-on-die to fetch data accessed from these memories to a location that is closer in a memory hierarchy (e.g., layer 1 (L1) in the FPGA context). These compute elements can include new types of registers or buffers to enable the AI data set centric memory usage management solution. In the present technology, specialized memory and storage architectures can be optimized to host AI training and inferencing data sets. In one example, a hybrid scheme can be supported, in which traditional DIMMs and AI DIMMs in a computing platform can be connected to a die. In addition, the proposed technology can be suitable for accelerated architectures (e.g., FPGAs), where the manner in which memory is accessed and managed can be more flexible, as compared to previous solutions.

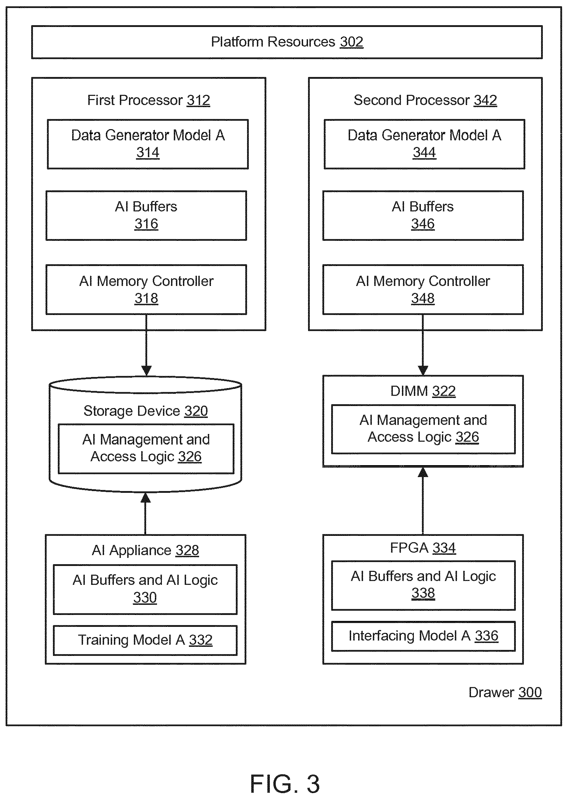

FIG. 3 illustrates an example of a drawer 300 that includes processor(s), storage devices and AI hardware platform(s). For example, the drawer 300 can include a first processor 312, which can include a data generator model A 314, AI buffers 316 and an AI memory controller 318. The drawer 300 can include a second processor 342, which can include a data generator model A 344, AI buffers 346 and an AI memory controller 348. The drawer 300 can include a storage device 320 with AI management and access logic 326, as well as a DIMM 322 with AI management and access logic 326. The storage device 320 and the DIMM 322 can be communicatively coupled to the first processor 312 and the second processor 342, respectively. The drawer 300 can include an AI appliance 328 with AI buffers and AI logic 330 and training model A 332. The drawer 300 can include an FPGA 334 with AI buffers and AI logic 338 and inferencing model A 336. In addition, the AI appliance 328 and the FPGA 334 can be communicatively coupled to the storage device 320 and the DIMM 322, respectively, via the AI management and access logic 326.

In one example, the drawer 300 can include various compute elements, such as data consumer node(s) and data provider node(s). Examples of the data provider nodes include the first processor 312 and the second processor 342, which each contain data generator model A 314, 344 (e.g., the processors generate and provide data for model A). One example of the data consumer node is the AI appliance 328. In one example, the data for model A can be stored in the storage device 320 and the DIMM 322, respectively.

In one example, the AI memory controller 318 in the first processor 312 can perform data operations on the storage device 320. For example, the AI memory controller 318 can receive, from a compute element in the drawer 300 (e.g., the first processor 312 or the AI appliance 328), a request to perform a data operation with respect to an AI model ID, where the AI model ID corresponds to an AI model that runs in the drawer 300 (e.g., training model A 332). The AI memory controller 318 can determine that the storage device 320 in the drawer 300 is to be used for performing the data operation with respect to the AI model ID. The AI memory controller 318 can perform the data operation on the storage device 320 for the compute element with respect to the AI model ID.

In another example, the AI memory controller 348 in the second processor 342 can perform data operations on the DIMM 322. For example, the AI memory controller 348 can receive, from a compute element in the drawer 300 (e.g., the second processor 342 or the FPGA 334), a request to perform a data operation with respect to an AI model ID, where the AI model ID corresponds to an AI model that runs in the drawer 300 (e.g., inferencing model A 336). The AI memory controller 348 can determine that the DIMM 322 in the drawer 300 is to be used for performing the data operation with respect to the AI model ID. The AI memory controller 348 can perform the data operation on the DIMM 322 for the compute element with respect to the AI model ID.

In one example, the data operation performed by the AI memory controller 318, 348 can include a data read operation to read AI data (e.g., training data) associated with the AI model ID from the storage device 320 or DIMM 322, respectively, and return the AI data to the compute element. The AI data that is read from the storage device 320 or DIMM 322 can be addressable based on the AI model ID, and the AI data can be used by the compute element to train the AI model (e.g., the training model A 332 or the inferencing model A 336). In one example, the AI data that is returned to the compute element can be stored in a local buffer of the compute element. For example, the AI data can be stored in the AI buffers 316, 346 in the first processor 312 or the second processor 342, respectively. As another example, the AI data can be stored in the AI buffers and AI logic 330, 338 in the AI appliance 328 or the FPGA 334, respectively.

In one example, the data operation performed by the AI memory controller 318, 348 can include a data write operation to write AI data (e.g., training data) associated with the AI model ID that is received from the compute element to the storage device 320 or DIMM 322, respectively. The AI data that is written to the storage device 320 or DIMM 322, respectively, can be addressable based on the AI model ID.

In one example, the data operation performed by the AI memory controller 318, 348 can include a data read operation to read AI data (e.g., training data) associated with a defined data set ID for the AI model ID from the storage device 320 or DIMM 322, respectively, and return the AI data to the compute element. In another example, the data operation performed by the AI memory controller 318, 348 can include a data delete operation to delete AI data (e.g., training data) associated with the AI model ID from the storage device 320 or DIMM 322, respectively, after the AI data is read from the storage device 320 or DIMM 322.

In one example, the AI memory controller 318, 348 can determine the storage device 320 or the DIMM 322 in the drawer 300 to be used for performing the data operation (e.g., the data write operation or the data read operation) based on a mapping table (or tracking table) that is stored at the AI memory controller 318, 348. The mapping table can include a memory range in the storage device 320 or DIMM 322 for each AI model ID. In other words, based on the mapping table, the AI memory controller 318, 348 can determine a memory location of the AI data (associated with an AI model ID) in the drawer 300, and then perform the data operation accordingly.

In one example, the AI memory controller 318, 348 can register an AI model ID that corresponds to an AI model (e.g., the training model A 332 or the inferencing model A 336). During registration of the AI model ID, the AI memory controller 318, 348 can allocate a memory region in the storage device 320 or DIMM 322 for storage of AI data associated with the AI model ID.

In one configuration, a memory and storage AI model ID addressable architecture can include memory controllers and DIMMs. This architecture can include compute elements, die memory controllers and DIMM controllers. In one example, the compute elements (e.g., processors, AI hardware platforms, FPGAs) accessing a new type of memory can include new logic. The new logic can expose interfaces to fetch data from this new type of memory and storage. For example, the interfaces in the new logic can include: (1) an interface to register new types of AI models (which can provide an AI model ID as well as metadata that defines a size of a data set entry); (2) an interface to allocate new memory to a particular AI model ID; (3) an interface to read and write data sets for a particular AI model ID (where a read interface can enable to read a particular data set ID for a particular AI model ID, read any available data set for a particular AI model ID, or read and delete any available data set for a particular AI model ID); and (4) an interface to allow other compute elements to discover current AI model ID data that is being hosted within the memory or storage physical devices. In one example, the compute elements can include buffer(s) to place fetched data from the new type of memory, which can be addressable by the compute elements (e.g., the processors or FPGAs). The buffer(s) can be located closer to the compute elements (e.g., specialized buffers in L2 or L1) to facilitate access to these new data types.

In one example, the die memory controller(s) can include interfaces similar to the compute elements. For example, the die memory controller(s) can include: an interface to register new types of AI models, an interface to allocate new memory to a particular AI model ID, an interface to read and write data sets for a particular AI model ID, and an interface to allow other compute elements to discover current AI model ID data that is being hosted within the memory or storage physical devices. In addition, the die memory controller(s) can include can include a system decoder, which can track the storage of AI data corresponding to registered AI models on the DIMMs or storage devices. The system decoder can track the storage of the AI data in real time, using a mapping table (or tracking table). When a new request to map or un-map a memory range to a particular AI model is received, the system decoder can be updated to reflect the newly mapped or unmapped memory range. In addition, the system decoder can track a number of valid AI instances for each allocated memory range in the DIMMs or storage devices. In one example, the mapping table can include metadata that describes how data sets for a given AI model are defined, which can aid the compute elements to properly move and manipulate data sets for AI models. In one example, the die memory controller(s) can include logic to process read and write requests. The logic can apply different schemes to determine a final endpoint (e.g., a particular DIM) from which a data set is to be fetched. For example, the logic can apply load balancing or power schemes to determine a particular DIMM from which to fetch the data set.

In one example, the DIMM controllers can include logic to access data sets stored on the DIMM. Similar to the die memory controller(s), the logic in the DIMM can include a system decoder and mapping table to enable the access of data stored on the DIMM. For example, the logic in the DIMM can maintain the system decoder to track the storage of AI data corresponding to registered models on the DIMM. The logic in the DIMM can track the storage of the AI data in real time, using a mapping table that is maintained on the DIMM controller.

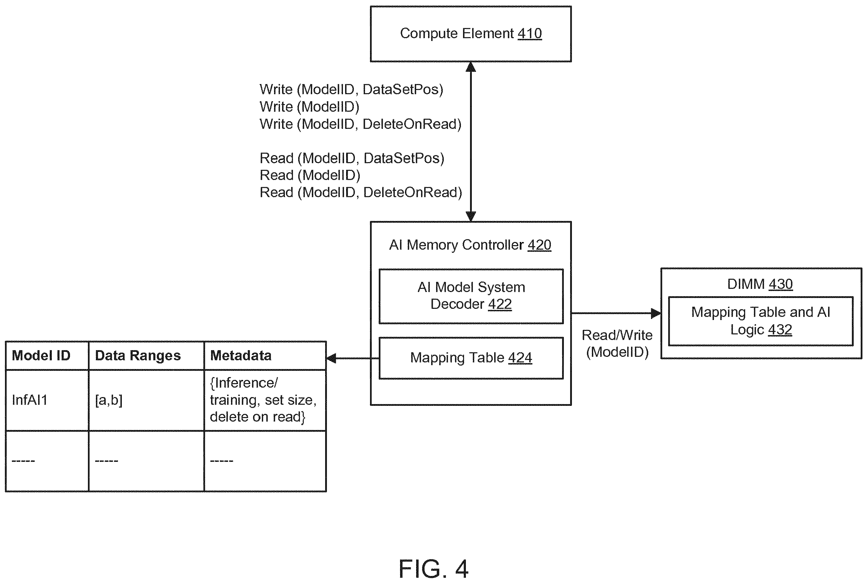

FIG. 4 illustrates an example of an AI memory controller 420. The AI memory controller 420 can receive data commands from a compute element 410 (e.g., a processor, FPGA, AI hardware platform). The data commands can include write commands (which can include an AI model ID, a data set and/or an instruction to delete on read) or read commands (which can include an AI model ID, a data set and/or an instruction to delete on read). The AI memory controller 420 can receive a read or write command from the compute element 410, and in response, the AI memory controller 420 can perform the read or write command accordingly with respect to a DIMM 430. For example, the AI memory controller 420 can write AI data to the DIMM 430 based on the AI model ID, or alternatively, the AI memory controller 420 can read AI data from the DIMM 430 based on the AI model ID. The DIMM can include mapping table and AI logic 432, which can enable the AI data to be read from the DIMM 430 or written to the DIMM 430. In one example, the AI memory controller 420 can include an AI model system decoder 422, which can maintain a mapping table 424. The mapping table 424 can track, for a given AI model ID, corresponding data ranges in the DIMM 430 and metadata (e.g., whether AI data in the data range is to be used for inference or training, a data set size, a setting to delete on read, and so on).

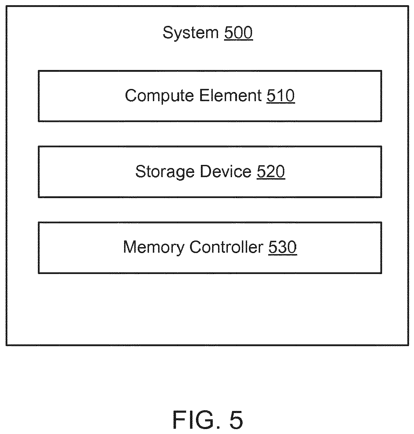

FIG. 5 illustrates a system 500 operable to perform data operations on storage devices. The system 500 can include a compute element 510, a storage device 520 and a memory controller 530. The memory controller 530 can receive, from the compute element 510 in a data center, a request to perform a data operation with respect to a model identifier (ID). The model ID can correspond to a model that runs in the data center. The memory controller 530 can determine the storage device 520 in the data center to be used for performing the data operation with respect to the model ID. The memory controller 530 can perform the data operation on the storage device 520 for the compute element 510 with respect to the model ID.

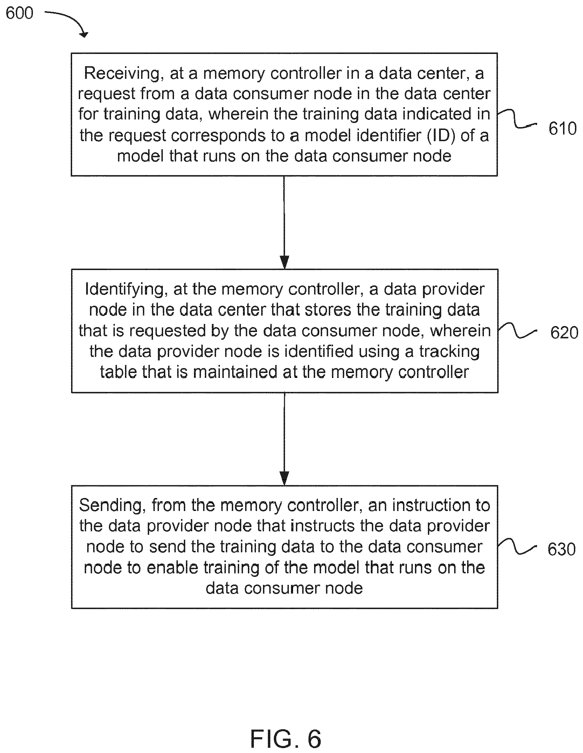

Another example provides a method 600 for assisting data transfers in a data center, as shown in the flow chart in FIG. 6. The method can be executed as instructions on a machine, where the instructions are included on at least one computer readable medium or one non-transitory machine readable storage medium. The method can include the operation of: receiving, at a memory controller in a data center, a request from a data consumer node in the data center for training data, wherein the training data indicated in the request corresponds to a model identifier (ID) of a model that runs on the data consumer node, as in block 610. The method can include the operation of: identifying, at the memory controller, a data provider node in the data center that stores the training data that is requested by the data consumer node, wherein the data provider node is identified using a tracking table that is maintained at the memory controller, as in block 620. The method can include the operation of: sending, from the memory controller, an instruction to the data provider node that instructs the data provider node to send the training data to the data consumer node to enable training of the model that runs on the data consumer node, as in block 630.

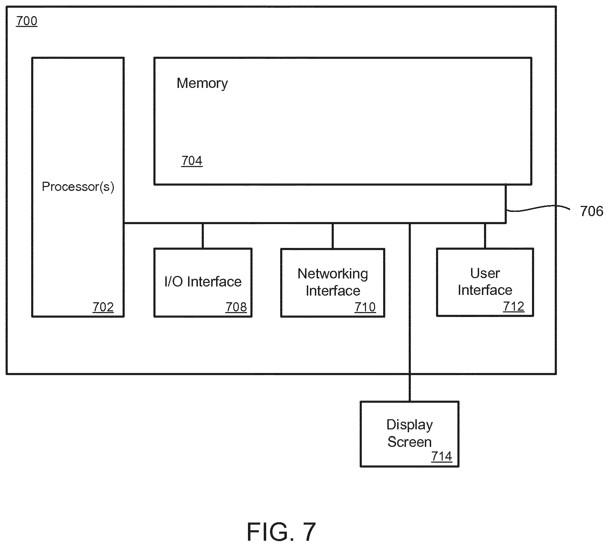

FIG. 7 illustrates a general computing system or device 700 that can be employed in the present technology. The computing system or device 700 can include a processor 702 in communication with a memory 704. The memory 704 can include any device, combination of devices, circuitry, and the like that is capable of storing, accessing, organizing, and/or retrieving data. Non-limiting examples include SANs (Storage Area Network), cloud storage networks, volatile or non-volatile RAM, phase change memory, optical media, hard-drive type media, and the like, including combinations thereof.

The computing system or device 700 additionally includes a local communication interface 706 for connectivity between the various components of the system. For example, the local communication interface 706 can be a local data bus and/or any related address or control busses as may be desired.

The computing system or device 700 can also include an I/O (input/output) interface 708 for controlling the I/O functions of the system, as well as for I/O connectivity to devices outside of the computing system or device 700. A network interface 710 can also be included for network connectivity. The network interface 710 can control network communications both within the system and outside of the system. The network interface can include a wired interface, a wireless interface, a Bluetooth interface, optical interface, and the like, including appropriate combinations thereof. Furthermore, the computing system or device 700 can additionally include a user interface 712, a display device 714, as well as various other components that would be beneficial for such a system.

The processor 702 can be a single or multiple processors, and the memory 704 can be a single or multiple memories. The local communication interface 706 can be used as a pathway to facilitate communication between any of a single processor, multiple processors, a single memory, multiple memories, the various interfaces, and the like, in any useful combination.

Various techniques, or certain aspects or portions thereof, can take the form of program code (i.e., instructions) embodied in tangible media, such as CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a RAM, EPROM, flash drive, optical drive, magnetic hard drive, solid state drive, or other medium for storing electronic data. One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations. Exemplary systems or devices can include without limitation, laptop computers, tablet computers, desktop computers, smart phones, computer terminals and servers, storage databases, and the like.

### Examples

The following examples pertain to specific invention embodiments and point out specific features, elements, or steps that can be used or otherwise combined in achieving such embodiments.

In one example, there is provided a memory controller. The memory controller can comprise logic to: receive, at the memory controller, a request from a data consumer node in a data center for training data, wherein the training data indicated in the request corresponds to a model identifier (ID) of a model that runs on the data consumer node. The memory controller can comprise logic to: identify, at the memory controller, a data provider node in the data center that stores the training data that is requested by the data consumer node, wherein the data provider node is identified using a tracking table that is maintained at the memory controller. The memory controller can comprise logic to: send, from the memory controller, an instruction to the data provider node that instructs the data provider node to send the training data to the data consumer node to enable training of the model that runs on the data consumer node.

In one example of the memory controller, the memory controller can further comprise logic to: receive an acknowledgement from the data consumer node after the training data is received at the data consumer node from the data provider node.

In one example of the memory controller, the memory controller can further comprise logic to: instruct the data provider node to delete the training data from the data provider node after the training data is provided to the data consumer node.

In one example of the memory controller, the tracking table tracks a storage of training data across different data provider nodes in the data center on a per model ID basis.

In one example of the memory controller, the memory controller can further comprise logic to: discover training data stored in a plurality of data provider nodes in the data center that are associated with certain model IDs; and register the training data that is associated with the model IDs, wherein a registration of the training data involves adding an indication of the training data, data provider nodes(s) that store the training data, and associated model IDs to the tracking table that is maintained at the memory controller.

In one example of the memory controller, the memory controller can further comprise logic to: facilitate a distribution and sharing of training data between the data consumer node and the data provider node in the data center.

In one example of the memory controller, the memory controller can further comprise logic to: manage one or more of a quality of service (QoS) or a service level agreement (SLA) for the model that is associated with the model ID; and store one or more of QoS information or SLA information in the tracking table, wherein the QoS information or the SLA information defines an amount of bandwidth for reading training data associated with the model ID from the data provider node or storing training data associated with the model ID to the data provider node.

In one example of the memory controller, the memory controller can further comprise logic to: process multiple requests received from the data consumer node, wherein the memory controller is configured to apply load balancing when instructing one or more data provider nodes in the data center to provide training data to the data consumer node in response to the multiple requests.

In one example of the memory controller, the memory controller can further comprise logic to: receive multiple requests received from the data consumer node, wherein each request is for training data associated with a separate model ID; determine, using the tracking table, a priority level for each of the model IDs associated with the multiple requests received from the data consumer node; and process the requests in order of priority based on the priority level for each of the model IDs associated with the multiple requests received from the data consumer node.

In one example of the memory controller, the data consumer node that runs the model is an artificial intelligence (AI) hardware platform; and the data providing node is one of: a storage node, a computing platform or a pooled memory.

In one example of the memory controller, the model is an artificial intelligence (AI) model.

In one example of the memory controller, the memory controller is a distributed shared memory controller that is included in each storage rack of the data center, or the memory controller is a centralized shared memory controller that is included per data center.

In one example, there is provided a system operable to perform data operations on storage devices. The system can include a compute element. The system can include a storage device. The system can include a memory controller. The memory controller can comprise logic to: receive, from the compute element in a data center, a request to perform a data operation with respect to a model identifier (ID), wherein the model ID corresponds to a model that runs in the data center. The memory controller can comprise logic to: determine, at the memory controller, the storage device in the data center to be used for performing the data operation with respect to the model ID. The memory controller can comprise logic to: perform, at the memory controller, the data operation on the storage device for the compute element with respect to the model ID.

In one example of the system, the data operation includes a data read operation to read training data associated with the model ID from the storage device and return the training data to the compute element.

In one example of the system, the training data that is read from the storage device is addressable based on the model ID and is used by the compute element to train the model, and the training data is returned to the compute element for storage in a local buffer of the compute element.

In one example of the system, the data operation includes a data write operation to write training data associated with the model ID that is received from the compute element to the storage device, wherein the training data that is written to the storage device is addressable based on the model ID.

In one example of the system, the data operation includes a data read operation to read training data associated with a defined data set ID for the model ID from the storage device and return the training data to the compute element.

In one example of the system, the data operation includes a data delete operation to delete training data associated with the model ID from the storage device after the training data is read from the storage device.

In one example of the system, the memory controller further comprises logic to: determine the storage device in the data center to be used for performing the data operation based on a mapping table that is stored at the memory controller, wherein the mapping table includes a memory range in the storage device for each model ID.

In one example of the system, the memory controller further comprises logic to: register the model ID that corresponds to the model, wherein a registration of the model includes an allocation of a memory region in the storage device for storage of training data associated with the model ID.

In one example of the system, the model is an artificial intelligence (AI) model.

In one example of the system, the compute element is one of a data consumer node or a data provider node, wherein the data consumer node includes an artificial intelligence (AI) hardware platform and the data provider node includes a computing platform.

In one example, there is provided a method for assisting data transfers in a data center. The method can include the operation of: receiving, at a memory controller in a data center, a request from a data consumer node in the data center for training data, wherein the training data indicated in the request corresponds to a model identifier (ID) of a model that runs on the data consumer node. The method can include the operation of: identifying, at the memory controller, a data provider node in the data center that stores the training data that is requested by the data consumer node, wherein the data provider node is identified using a tracking table that is maintained at the memory controller. The method can include the operation of: sending, from the memory controller, an instruction to the data provider node that instructs the data provider node to send the training data to the data consumer node to enable training of the model that runs on the data consumer node.

In one example of the method for assisting data transfers in the data center, the method can further include the operation of: receiving an acknowledgement from the data consumer node after the training data is received at the data consumer node from the data provider node.

In one example of the method for assisting data transfers in the data center, the method can further include the operation of: instructing the data provider node to delete the training data from the data provider node after the training data is provided to the data consumer node.

In one example of the method for assisting data transfers in the data center, the tracking table tracks a storage of training data across different data provider nodes in the data center on a per model ID basis.

In one example of the method for assisting data transfers in the data center, the method can further include the operation of: discovering training data stored in a plurality of data provider nodes in the data center that are associated with certain model IDs; and registering the training data that is associated with the model IDs, wherein a registration of the training data involves adding an indication of the training data, data provider nodes(s) that store the training data, and associated model IDs to the tracking table that is maintained at the memory controller.

In one example of the method for assisting data transfers in the data center, the method can further include the operation of: facilitating a distribution and sharing of training data between the data consumer node and the data provider node in the data center.

In one example of the method for assisting data transfers in the data center, the method can further include the operation of: managing one or more of a quality of service (QoS) or a service level agreement (SLA) for the model that is associated with the model ID, wherein the QoS information or the SLA information defines an amount of bandwidth for reading training data associated with the model ID from the data provider node or storing training data associated with the model ID to the data provider node.

In one example of the method for assisting data transfers in the data center, the method can further include the operation of: processing multiple requests received from the data consumer node, wherein the memory controller is configured to apply load balancing when instructing one or more data provider nodes in the data center to provide training data to the data consumer node in response to the multiple requests.

In one example of the method for assisting data transfers in the data center, the method can further include the operation of: receiving multiple requests received from the data consumer node, wherein each request is for training data associated with a separate model ID; determining, using the tracking table, a priority level for each of the model IDs associated with the multiple requests received from the data consumer node; and processing the requests in order of priority based on the priority level for each of the model IDs associated with the multiple requests received from the data consumer node.

In one example of the method for assisting data transfers in the data center, the data consumer node that runs the model is an artificial intelligence (AI) hardware platform; and the data providing node is one of: a storage node, a computing platform or a pooled memory.

In one example of the method for assisting data transfers in the data center, the model is an artificial intelligence (AI) model.

In one example of the method for assisting data transfers in the data center, the memory controller is a distributed shared memory controller that is included in each storage rack of the data center, or the memory controller is a centralized shared memory controller that is included per data center.

While the forgoing examples are illustrative of the principles of invention embodiments in one or more particular applications, it will be apparent to those of ordinary skill in the art that numerous modifications in form, usage and details of implementation can be made without the exercise of inventive faculty, and without departing from the principles and concepts of the disclosure.

## Claims

1. A memory controller, comprising logic to:
receive, at the memory controller, a request from a data consumer node in a data center for training data, wherein the training data indicated in the request corresponds to a model identifier (ID) of a model that runs on the data consumer node;
identify, at the memory controller, a data provider node in the data center that stores the training data that is requested by the data consumer node, wherein the data provider node is identified using a tracking table that is maintained at the memory controller; and
send, from the memory controller, an instruction to the data provider node that instructs the data provider node to send the training data to the data consumer node to enable training of the model that runs on the data consumer node.

2. The memory controller of claim 1, further comprising logic to facilitate a distribution and sharing of training data between the data consumer node and the data provider node in the data center.

3. The memory controller of claim 1, further comprising logic to:
manage one or more of a quality of service (QoS) or a service level agreement (SLA) for the model that is associated with the model ID; and
store one or more of QoS information or SLA information in the tracking table, wherein the QoS information or the SLA information defines an amount of bandwidth for reading training data associated with the model ID from the data provider node or storing training data associated with the model ID to the data provider node.

4. The memory controller of claim 1, further comprising logic to process multiple requests received from the data consumer node, wherein the memory controller is configured to apply load balancing when instructing one or more data provider nodes in the data center to provide training data to the data consumer node in response to the multiple requests.

5. The memory controller of claim 1, wherein the memory controller is a distributed shared memory controller that is included in each storage rack of the data center, or the memory controller is a centralized shared memory controller that is included per data center.

6. A system operable to perform data operations on storage devices, the system comprising:
a compute element;
a storage device; and
a memory controller comprising logic to:
receive, from the compute element in a data center, a request to perform a data operation with respect to a model identifier (ID), wherein the model ID corresponds to a model that runs in the data center;
determine, at the memory controller, the storage device in the data center to be used for performing the data operation with respect to the model ID; and
perform, at the memory controller, the data operation on the storage device for the compute element with respect to the model ID.

7. The system of claim 6, wherein the data operation includes a data read operation to read training data associated with the model ID from the storage device and return the training data to the compute element, and wherein the training data that is read from the storage device is addressable based on the model ID and is used by the compute element to train the model, and the training data is returned to the compute element for storage in a local buffer of the compute element.

8. The system of claim 6, wherein the data operation includes a data write operation to write training data associated with the model ID that is received from the compute element to the storage device, wherein the training data that is written to the storage device is addressable based on the model ID, or wherein the data operation includes a data read operation to read training data associated with a defined data set ID for the model ID from the storage device and return the training data to the compute element.

9. The system of claim 6, wherein the memory controller further comprises logic to determine the storage device in the data center to be used for performing the data operation based on a mapping table that is stored at the memory controller, wherein the mapping table includes a memory range in the storage device for each model ID.

10. The system of claim 6, wherein the memory controller further comprises logic to register the model ID that corresponds to the model, wherein a registration of the model includes an allocation of a memory region in the storage device for storage of training data associated with the model ID.

11. A method for assisting data transfers in a data center, the method comprising:
receiving, at a memory controller in a data center, a request from a data consumer node in the data center for training data, wherein the training data indicated in the request corresponds to a model identifier (ID) of a model that runs on the data consumer node;
identifying, at the memory controller, a data provider node in the data center that stores the training data that is requested by the data consumer node, wherein the data provider node is identified using a tracking table that is maintained at the memory controller; and
sending, from the memory controller, an instruction to the data provider node that instructs the data provider node to send the training data to the data consumer node to enable training of the model that runs on the data consumer node.

12. Either of claims 1 or 11, wherein the tracking table tracks a storage of training data across different data provider nodes in the data center on a per model ID basis.

13. Either of claims 1 or 11, wherein the memory controller further comprises logic for, or the method further comprises:
discovering training data stored in a plurality of data provider nodes in the data center that are associated with certain model IDs; and
registering the training data that is associated with the model IDs, wherein a registration of the training data involves adding an indication of the training data, data provider nodes(s) that store the training data, and associated model IDs to the tracking table that is maintained at the memory controller.

14. The method of claim 11, further comprising managing one or more of a quality of service (QoS) or a service level agreement (SLA) for the model that is associated with the model ID, wherein QoS information or SLA information defines an amount of bandwidth for reading training data associated with the model ID from the data provider node or storing training data associated with the model ID to the data provider node.

15. Either of claims 1 or 11, wherein the memory controller further comprises logic for, or the method further comprises:
receiving multiple requests from the data consumer node, wherein each request is for training data associated with a separate model ID;
determining, using the tracking table, a priority level for each of the model IDs associated with the multiple requests received from the data consumer node; and
processing the requests in order of priority based on the priority level for each of the model IDs associated with the multiple requests received from the data consumer node.
